# EUROPÄISCHE PATENTANMELDUNG

(11) **EP 1 679 407 A1**
(43) Veröffentlichungstag der Anmeldung: **12.07.2006**
(21) Anmeldenummer: 06000126.0
(22) Anmeldetag: 04.01.2006
(51) Int. Cl.: E03F 7/04

(54) **Rückstauverschluss**

(30) Priorität: 05.01.2005 DE 102005000839; 03.03.2005 DE 102005009777
(71) Anmelder: ACO SEVERIN AHLMANN GMBH & CO. KG, 24768 Rendsburg (DE)
(72) Erfinder:
(74) Vertreter: Bohnenberger, Johannes

(57) **Zusammenfassung**

Es wird ein Rückstauverschluss aufgezeigt, der ein Gehäuse mit einem Einlass und einem Auslass umfasst, an die jeweils eine Rohrleitung anschließbar ist. Im Gehäuse ist eine obere Zugangsöffnung vorgesehen, die durch einen Deckel verschließbar ist. In das Gehäuse sind Ventilsitze mit zugehörigen Ventilklappen einbaubar bzw. aus dem Gehäuse ausbaubar. Zur Erleichterung der Herstellbarkeit sowie der Handhabbarkeit und zum Erzielen einer dauerhaften Benutzbarkeit wird vorgeschlagen, das Gehäuse mit zueinander parallelen Führungen für mindestens zwei gleichartige Ventilsitze auszustatten, in welche diese (gleichartigen) Ventilsitze zusammen mit daran angelenkten Ventilklappen derart durch die Zugangsöffnung hindurch einsetzbar sind, dass die Ventile in Richtung auf den Einlass sowie auf den Auslass sicher gehalten sind.

## Beschreibung

Die Erfindung betrifft einen Rückstauverschluss nach dem Oberbegriff des Patentanspruches 1. Derartige Rückstauverschlüsse werden in Abwasser-Rohrleitungen von Hausanschlüssen eingebaut, um sicherzustellen, dass bei einer Überflutung des angeschlossenen Kanals bzw. Ableitungssystems das Abwasser nicht ins Haus zurückfließen kann. Je nach Anwendungsbereich kann neben einer sich selbsttätig schließenden Klappe auch eine Notverschlussklappe vorgesehen sein, die durch Betätigen eines Handhebels zwangsgeschlossen wird.

Weiterhin ist aus der DE 27 55 177 C3 ein sogenanntes "Reinigungsrohr" bekannt, das in erster Linie dazu dient, einen Zugang zu derartigen Abwasserleitungen zu ermöglichen, wenn diese gereinigt werden müssen. Darüber hinaus ist dieses Reinigungsrohr auch mit Ventilklappen ausrüstbar, so dass ein Rückstauverschluss entsteht.

Bei den bekannten Anordnungen wird der Einbau der Ventilklappen sowie deren komplizierter Aufbau für problematisch angesehen. Darüber hinaus kann es sehr leicht zu Beschädigungen kommen, wenn der Rückstauverschluss nur zum Zwecke einer Reinigung des Abwasserrohres benutzt wird.

Der Erfindung liegt die Aufgabe zu Grunde, einen Rückstauverschluss der eingangs genannten Art dahin gehend weiter zu bilden, dass bei einem vereinfachten Aufbau eine vereinfachte Handhabung auch bei rauen Umweltbedingungen gewährleistet ist.

Diese Aufgabe wird durch einen Rückstauverschluss nach Anspruch 1 gelöst.

Insbesondere wird die Aufgabe durch einen Rückstauverschluss gelöst, umfassend ein Gehäuse mit einem Einlass und einem Auslass, an die jeweils eine Leitung anschließbar ist, sowie mit einer oberen Zugangsöffnung, die durch einen Deckel verschließbar ist, mit Ventilsitzen und zugehörigen Ventilklappen, die in das Gehäuse ein- und aus dem Gehäuse ausbaubar sind, wobei das Gehäuse zueinander parallele Führungen für mindestens zwei gleichartige Ventilsitze aufweist, in welche die Ventilsitze zusammen mit daran angelenkten Ventilklappen derart durch die Zugangsöffnung einsetzbar sind, dass die Ventile in Richtung auf den Einlass sowie auf den Auslass gehalten sind.

Ein wesentlicher Punkt der Erfindung liegt darin, dass das Gehäuse als "Grundbaustein" verwendet wird, der nach Art eines Bausatzes durch mehrere, gleichartige Ventilklappen nachrüstbar ist. Durch die zueinander parallelen Führungen ist ein besonders leichter Austausch der Ventilsitze samt daran angelenkten Ventilklappen möglich, wobei diese Funktionselemente wiederum im Wesentlichen identisch aufgebaut sein können. Dadurch ergibt sich ein vereinfachter Aufbau samt geringeren Lagerhaltungskosten.

Die Ventilsitze weisen vorzugsweise Dichteinrichtungen auf, während die Ventilklappen als im Wesentlichen starre Körper ausgebildet sind. Zum einen ist dieser Aufbau besonders einfach, zum anderen ergibt sich dadurch ein geringeres Gewicht der Ventilklappen, was wiederum zu einem flinkeren Schließen im Falle eines Rückstaus führt.

Vorzugsweise sind die Ventilklappen einstückig ausgebildet. Hierzu eignet sich insbesondere Kunststoff, so dass die Ventilklappe als (Spritz-) Gussteil gefertigt sein kann. Die Dichtungen der Ventilklappen und/oder des Ventilsitzes sind vorzugsweise eingespritzt und somit sehr gut mit den Teilen verbunden. Dies bedeutet, dass sie auch nach längerer Gebrauchsdauer einen sehr guten Sitz aufweisen. Im Übrigen haben die Ventilklappen und Ventilsitze aufgrund der beschriebenen Herstellungsweise keine metallischen Bestandteile, sind also vollständig korrosionssicher.

Für einen Notverschluss wird vorzugsweise ein Verriegelungshebel am Deckel angelenkt, der den Deckel durchdringt und oberhalb des Deckels, frei zugänglich einen Griff aufweist. Unterhalb des Deckels ist ein Betätigungsarm vorgesehen, der in das Gehäuse ragt und in einer Öffnungsstellung außer Eingriff mit einer dazu gehörigen Ventilklappe steht und bei Betätigung mit der dazu gehörigen Ventilklappe in Eingriff gelangt. In einer Schließstellung verrastet der Hebel mit der Ventilklappe. Ein und dieselbe Ventilklappe wird vorzugsweise sowohl als selbsttätig arbeitende Ventilklappe (ohne Betätigungshebel) als auch als Ventilklappe zur Zusammenwirkung mit dem Nothebel verwendet.

Die Ventilklappe weist vorzugsweise eine Betätigungsrippe auf, welche einerseits die Ventilklappe im Wesentlichen über ihre gesamte Höhe versteifend überdeckt und andererseits eine von der Ventilklappe abgewandte Betätigungskante aufweist, die mit dem Betätigungsarm in Eingriff kommt. In dieser "Doppelfunktion" kann also die Ventilklappe sowohl als Notverschlussklappe als auch als selbsttätig schließende Klappe verwendet werden.

Die Betätigungskante weist vorzugsweise eine Rastkerbe zum Verriegeln der Schließstellung auf. Es muss somit kein gesonderter Mechanismus zum Halten der Klappe in einer Verriegelungsstellung vorgesehen sein.

Das Gehäuse weist vorzugsweise einen, die Zugangsöffnung umgebenden Flansch zur Bildung einer Schachtöffnung auf. Mit diesem Flansch wird das Gehäuse in den Boden eingegossen, wobei der Flansch dem Gehäuse einen zusätzlichen Halt im Boden verleiht.

Vorzugsweise ist eine Dichtmanschette zum Abdichten gegenüber einer Dichtfolie vorgesehen, was wiederum nach Eingießen in Ortbeton eine absolute Dichtheit gewährleistet.

Vorzugsweise ist ein in seiner Länge veränderbares Schachtbauteil zum Aufsetzen auf den Flansch vorgesehen. Dieses kann teleskoprohrartig aufgebaut sein oder Trennkerben zum Ablängen aufweisen. Dadurch ist eine hohe Variabilität beim Eingießen in einen Boden gewährleistet. Das Schachtbauteil wiederum weist vorzugsweise an einem Ende einen Rahmen zum Einsetzen einer Abdeckung auf.

Weiterhin ist das Gehäuse vorzugsweise mit Verkrallungsvorsprüngen und zwar insbesondere an einem unteren Bereich zum Eingießen in Ortbeton versehen, wobei zum Ausrichten während des Eingießens diese Verkrallungsvorsprünge vorzugsweise Standflächen bilden.

Vorzugsweise ist das Gehäuse aus Polymerbeton hergestellt. Dieses Material ist an sich z.B. aus dem Bereich der Oberflächenentwässerungsrinnen bekannt. Im vorliegenden Fall bringt dieses Material jedoch eine Vielzahl von überraschenden Vorteilen mit sich. Zum einen werden Fließgeräusche, die gerade im Bereich der Klappen entstehen können, sehr wirksam gedämpft. Zum anderen kann ein derartiger Polymerbetonkörper, der aufgrund seines Materials äußerst korrosionsfest ist, im Gegensatz zu den bisher üblichen reinen Kunststoffbauteilen beheizt werden. Hierzu kann ein um das Gehäuse gelegtes Heizband verwendet werden. Es ist aber auch möglich, eine Heizung direkt in das Gehäusebauteil mit einzugießen.

Der Grundkörper hat auf beiden Seiten Muffen, statt - wie sonst üblich - eine Muffe und einen Stutzen. Dadurch kann im Sanierungsfall die Rohrleitung leichter angeschlossen werden.

Bevorzugte Ausführungsformen der Erfindung ergeben sich aus den Unteransprüchen.

Nachfolgend werden Ausführungsbeispiele der Erfindung anhand von Abbildungen näher erläutert. Hierbei zeigen
- - Fig. 1: eine erste Ausführungsform eines (leeren) Gehäuses,
- - Fig. 2: eine Draufsicht auf das Gehäuse nach Fig. 1,
- - Fig. 3: eine Seitenansicht eines aufsetzbaren Schachtes,
- - Fig. 4: eine Ansicht entlang der Linie IV-IV aus Fig. 3,
- - Fig. 5: eine weitere Ausführungsform eines (leeren) Gehäuses in einer Darstellung entsprechend der nach Fig. 1,
- - Fig. 6: eine perspektivische Draufsicht auf einen Gehäusedeckel,

- - Fig. 7: eine Unteransicht des Deckels nach Fig. 6,
- - Fig. 8: eine schematisierte Seitenansicht eines Gehäuses mit Deckel und Betätigungshebel,
- - Fig. 9: eine Seitenansicht eines Ventilsitzes,
- - Fig. 10: eine Seitenansicht einer Ventilklappe,
- - Fig. 11: eine Ansicht auf eine Ventilklappe von oben,
- - Fig. 12: eine Ansicht entlang der Linie XII-XII aus Fig. 11,
- - Fig. 13: eine Ansicht entlang der Linie XIII-XIII aus Fig. 12,
- - Fig. 14: eine Draufsicht auf einen Ventilsitz,
- - Fig. 15: eine Ansicht entlang der Linie XV-XV aus Fig. 14,
- - Fig. 16: eine Ansicht entlang der Linie XIV-XIV aus Fig. 14,

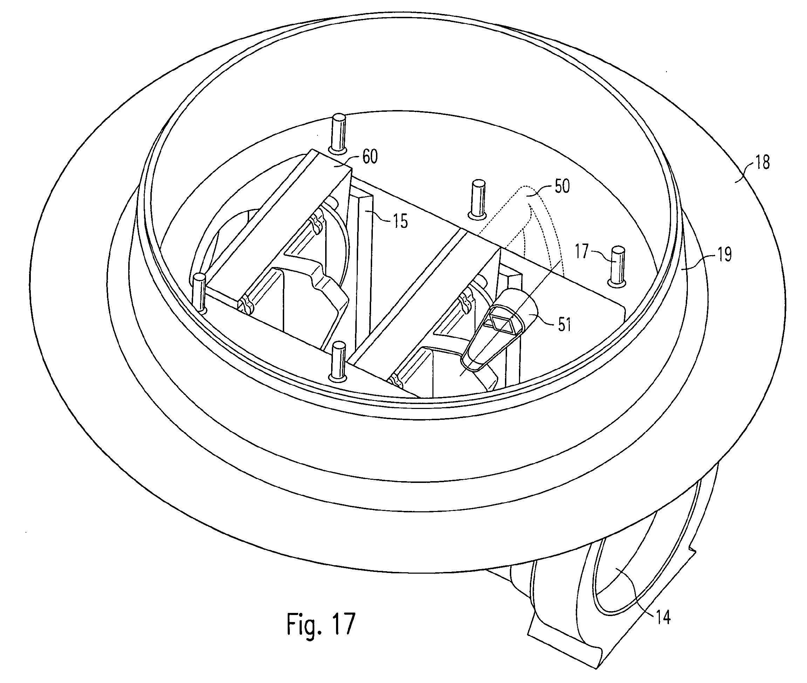

- - Fig. 17: eine perspektivische Teilansicht einer Ausführungsform der Erfindung gemäß Fig. 5 und
- - Fig. 18: eine perspektivische Teilansicht eines Gehäusedeckels mit Ventilsitzen, Ventilklappen und Anschlussteilen.

In der nachfolgenden Beschreibung werden für gleiche und gleich wirkende Teile dieselben Bezugsziffern verwendet.

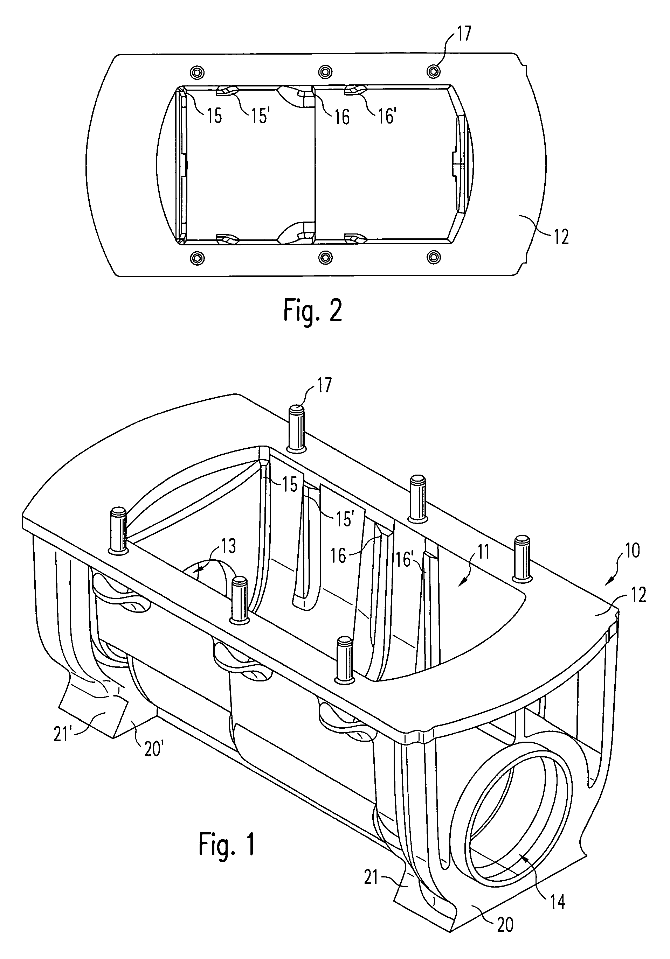

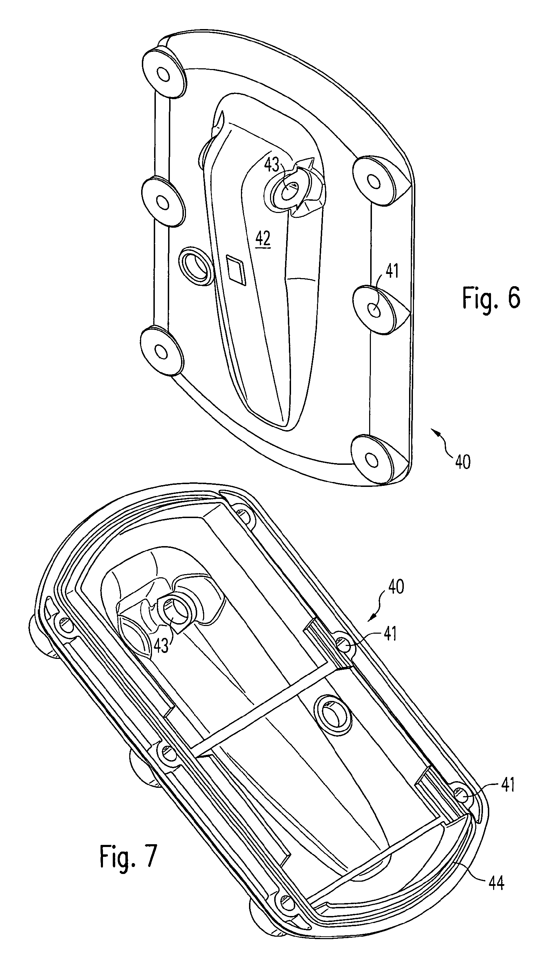

In Fig. 1 ist eine perspektivische Ansicht eines Gehäuses 10 gezeigt, das als Grundbauteil aus Polymerbeton gegossen wird. Das Gehäuse 10 weist auf seiner Oberseite eine Zugangsöffnung 11 auf, durch welche der gesamte Innenraum des Gehäuses 10 zugänglich ist. Diese Zugangsöffnung 11 wird von einer Deckfläche 12 umgrenzt, auf die ein Deckel 40 (siehe Fig. 6 und 7) aufgesetzt und mittels in das Gehäuse 10 eingegossener Stehbolzen 17 befestigt werden kann.

Das Gehäuse 10 kann wie üblich auf einer Seite eine Muffe und auf der anderen Seite einen Stutzen aufweisen. Vorzugsweise - und dies ist auch im Ausführungsbeispiel so gezeigt - weist das Gehäuse 10 an beiden Seiten Muffen auf. Dadurch kann im Sanierungsfall die Rohrleitung leichter als bisher angeschlossen werden.

In das Gehäuse 10 münden ein Einlass 13 und im Wesentlichen koaxial zu diesem ein Auslass 14, wobei an den Einlass 13 bzw. den Auslass 14 über entsprechende Koppelflansche Rohrleitungen angeschlossen werden können.

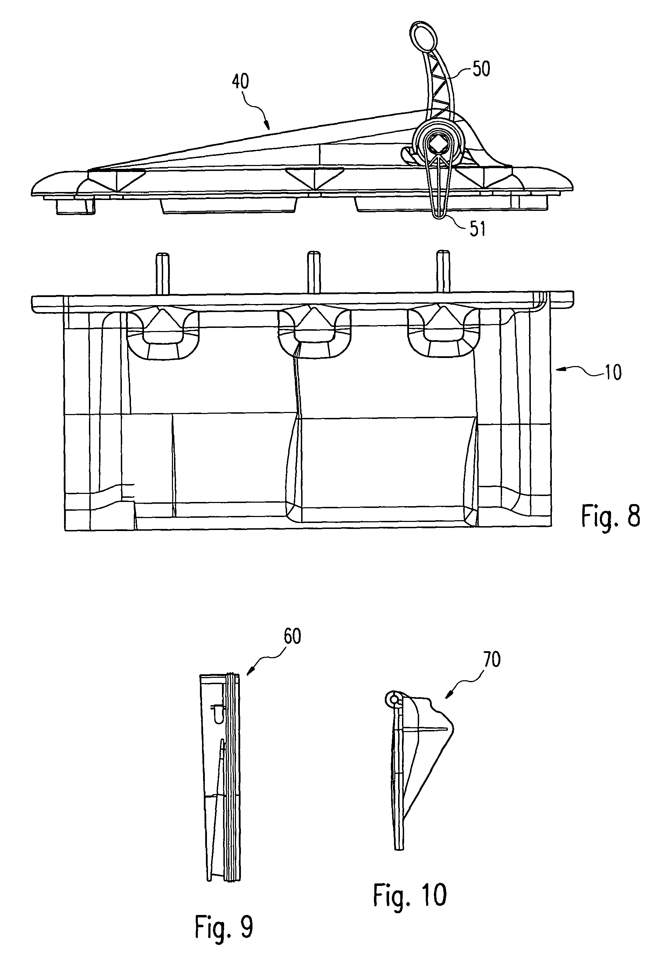

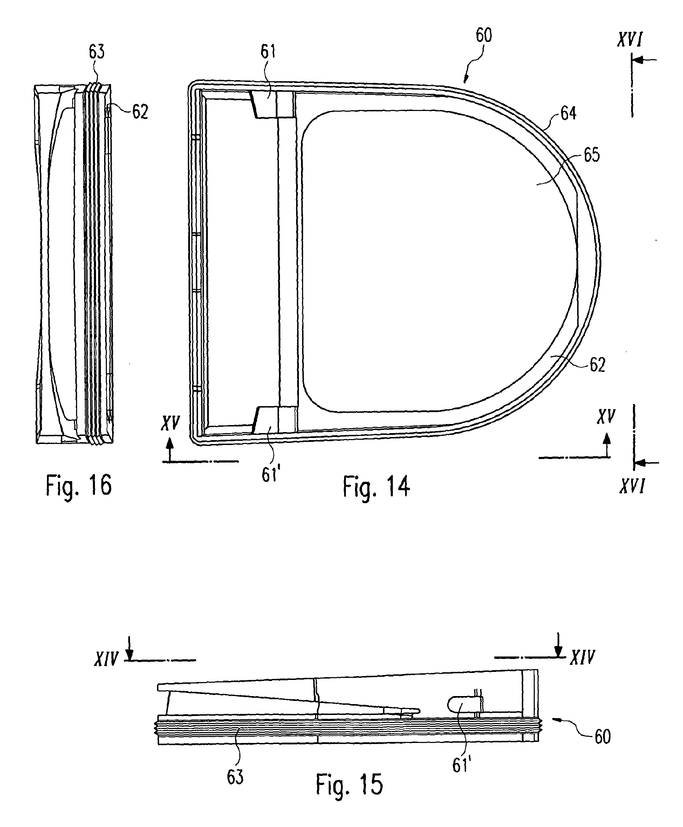

Im Inneren des Gehäuses 10 sind ein erstes Führungsleistenpaar 15, 15' und ein zweites Führungsleistenpaar 16, 16' mit eingegossen. Die Führungsleistenpaare 15, 15' und 16, 16' sind zueinander parallel, so dass von oben, durch die Zugangsöffnung 11 Ventilsitze 60 (siehe Fig. 9 und Fig. 14 - 16) leicht eingesetzt werden können und durch diese Führungsleistenpaare 15, 15' bzw. 16, 16' in ihrer Position in Richtung auf den Einlass 13 bzw. den Auslass 14 exakt positioniert und dicht gehalten sind.

An seiner Unterseite weist das Gehäuse Füße 20, 20' auf, über die es auf einer entsprechenden Unterlage während des Eingießens gestellt werden kann. Die Füße 20, 20' weisen Einkerbungen 21 auf, die nach dem Eingießen in Ortbeton einen festen Halt des Gehäuses 10 im Beton sicherstellen.

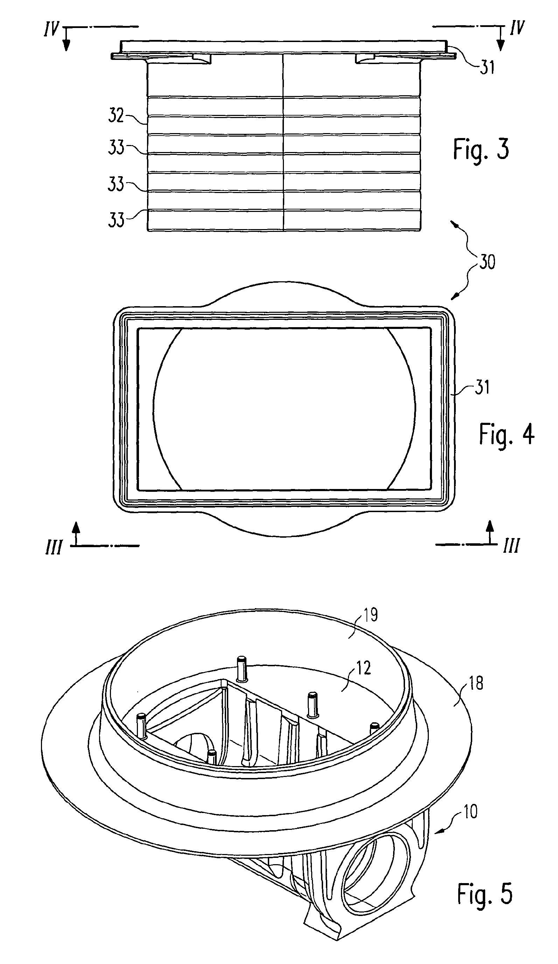

In Fig. 5 ist eine weitere Ausführungsform der Erfindung gezeigt, bei der das Gehäuse rings um die Deckfläche 12 einen Flansch 19 aufweist, auf bzw. in den ein Schachtbauteil 30 (siehe Fig. 3 und 4) auf-/eingesetzt werden kann. Das Schachtbauteil 30 wird mit seinem Unterrand ins Innere des Flansches 19 (eng) eingesetzt. Zur Abdichtung des Gehäuses 10 gegenüber einer in den Boden eingebauten Dichtfolie dient eine Dichtmanschette 18. Die Dichtmanschette 18 ist flüssigkeitsdicht mit dem Gehäuse 10 verbunden und derart zweiteilig (mit zwei konzentrischen Dichtflächen) ausgebildet, dass eine Dichtfolie unter vollständiger Abdichtung zum Gehäuse 10 eingesetzt werden kann, so dass keine Flüssigkeit zwischen der Dichtfolie und dem Gehäuse 10 in den Untergrund eindringen kann. Ansonsten ist das Gehäuse 10 so aufgebaut, wie dies anhand der Fig. 1 erläutert wurde.

Das Schachtbauteil 30 weist an einem Ende einen Rahmen 31 auf, der derart geformt ist, dass eine an sich bekannte Abdeckung eingesetzt werden kann. Der Rahmen 31 sitzt auf einem Rohrstutzen 32, der mit Umfangskerben 33 derart versehen ist, dass ein Ablängen des Rohrstutzens im Bereich der Abläng-Kerben 33 leicht möglich ist, um so eine Anpassung an die baulichen Gegebenheiten zu erzielen.

Der eingangs schon erwähnte Deckel 40, der in den Fig. 6 und 7 gezeigt ist, weist Befestigungsflächen 41 auf, die auf die Stehbolzen 17 des Gehäuses 10 passen, so dass der Deckel 40 auf das Gehäuse 10 aufgesetzt und mit diesem verschraubt werden kann. Hierbei sei angemerkt, dass die Orientierung des Deckels 40 durch den (unregelmäßigen) Abstand der Stehbolzen 17 eindeutig ist, so dass der Deckel 40 immer in dieselbe Richtung bezüglich Einlass 13 und Auslass 14 zeigt.

Der Deckel 40 weist weiterhin eine Kappe 42 auf, in welcher ein Wellendurchlass 43 vorgesehen ist, um einen Verriegelungshebel 50 anzulenken. An seiner Unterseite weist der Deckel 40 eine Dichtung 44 auf, die bei aufgesetztem Deckel 40 auf der Deckfläche 12 des Gehäuses 10 aufliegt.

Wie in Fig. 8 gezeigt, wird der Verriegelungshebel 50 von außen auf den Deckel aufgesetzt, so dass seine zwei Schenkel die Kappe 42 seitlich umgreifen. Jeder Schenkel des Verriegelungshebels 50 weist ein Durchgangsloch mit quadratischem Querschnitt derart auf, dass eine Welle mit zumindest abschnittsweise quadratischem Querschnitt hindurch steckbar ist. Auf dieser Welle sitzt ein Betätigungsarm 41 mit seinem korrespondierend geformten Auge, so dass der Betätigungsarm 41 mit dem Verriegelungshebel 50 drehfest verbunden ist. Diese Situation ist (schematisiert) in Fig. 8 gezeigt, wobei der Verriegelungshebel 50 und der Betätigungsarm 51 bzw. der Deckel 4 "durchsichtig" gezeigt sind, um die Orientierung der Bauteile zueinander zu erläutern.

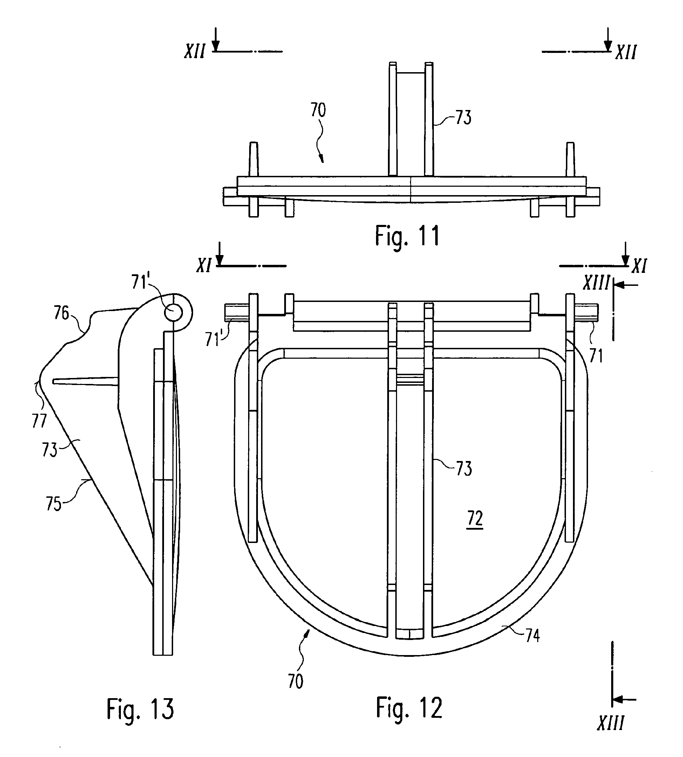

Nachfolgend werden der Ventilsitz 60 und die Ventilklappe 70 anhand der Fig. 9 - 16 erläutert.

Der Ventilsitz 60 weist einen Sitzkörper 64 und eine Durchgangsöffnung 65 auf. Die Durchgangsöffnung 65 wird von einer Dichtung 62 umgeben, wobei am Außenumfang der Sitzkörpers 64 ein Dichtelement 63 vorgesehen ist, das den Ventilsitz 60 gegenüber dem Gehäuse 10 abdichtet, wenn der Ventilsitz 60 in den Raum zwischen den Führungsleistenpaaren 15, 15' bzw. 16, 16' eingesetzt ist.

Weiterhin weist der Ventilsitz 60 ein Paar von Anlenksitzen 61, 61' auf, über welche eine Ventilklappe 70 mit ihren am Oberende angebrachten Anlenkzapfen 71, 71' am Ventilsitz 60 befestigt werden kann.

Die Ventilklappe 70 weist eine Klappenfläche 72 auf, die von einem Dichtrand 74 umgeben ist, der bei geschlossener Klappe mit der Dichtung 62 des Ventilsitzes 60 in Kontakt kommt.

Über die gesamte Höhe der Klappenfläche 72 bis hin zu einem Oberrand der Ventilklappe 70 ist eine Betätigungsrippe 73 angegossen, die auf ihrer freien Seite mit einer Betätigungskante 75 versehen ist, welche von einem, etwa im oberen Fünftel der Ventilklappe 70 vorgesehenen Maximum 77 zum Unterrand der Klappe hin abfällt. Auf der anderen Seite des Maximums 77 fällt die Betätigungskante 75 mit einer größeren Neigung ab und mündet in eine Rastkerbe 76.

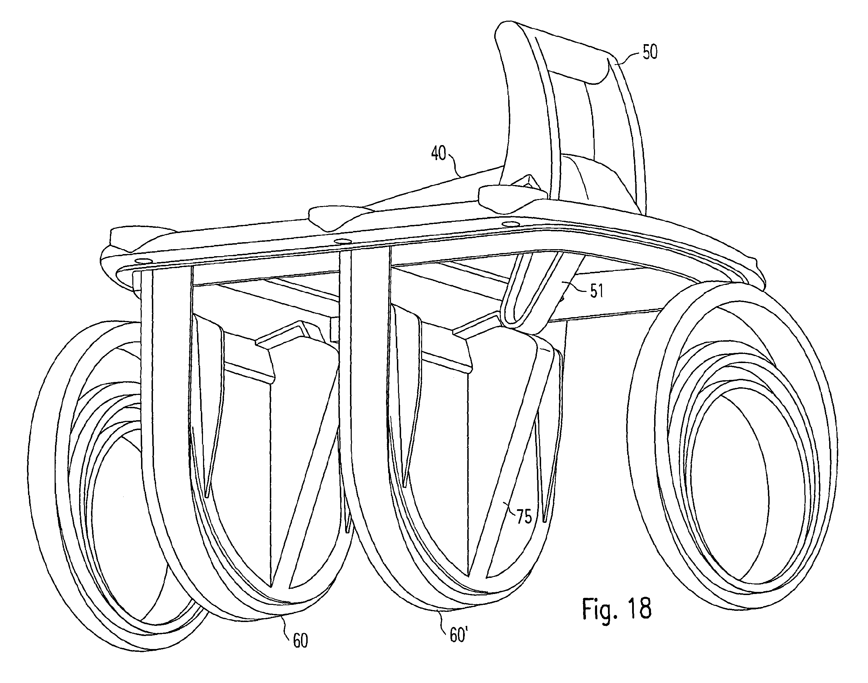

Durch diese Formgebung ist es, wie aus Fig. 18 ersichtlich, möglich, die Ventilklappe 70 mittels des Betätigungsarmes 51 aus ihrem vollständig geöffneten Zustand in einen Verriegelungszustand zu überführen, wobei der Betätigungsarm 51 mit seinem Ende zunächst über die (sanfter) geneigte Betätigungskante 75 gleitet, dann das Maximum 77 überschreitet und schließlich in die Rastkerbe 76 einrastet. Dadurch ist insbesondere im Bereich kurz vor dem vollständigen Schließen der Ventilklappe 70 eine Art Kniehebelwirkung zu bemerken, durch die eine sehr hohe Schließkraft auf die Ventilklappe 70 aufgebracht werden kann. Dadurch können auch Verunreinigungen zusammengepresst bzw. vom Ventilsitz fortgedrückt werden.

Aufgrund der hier gezeigten Anordnung der Führungen für die Ventilsitze im Gehäuse ist es möglich, diese (samt den Ventilklappen) bei abgenommenem Deckel 40 leicht zu entfernen, so dass nunmehr ein freier Zugang zu den angeschlossenen Rohrleitungen besteht. Dadurch kann nun mit einem entsprechenden Räumwerkzeug die Rohrleitung gründlich gesäubert werden, ohne dass hierbei die Ventile beschädigt werden können. Nach Beendigung der Reinigungsarbeiten können die Ventilsitze (samt Ventilklappen) ganz einfach wieder eingesetzt werden, um einen funktionsfähigen Rückstauverschluss zu erhalten.

Da die Ventilklappen und die Ventilsitze keinerlei metallische Bestandteile beinhalten, sondern vollständig aus Kunststoff (spritz-gegossen) sind, besteht keine Gefahr der Korrosion. Die Dichtungen der Ventilklappen und des Ventilsitzes sind vorzugsweise in das Kunststoffmaterial eingespritzt und somit sehr gut mit den Teilen verbunden. Dies bedeutet, dass sie auf Dauer einen guten Sitz aufweisen.

### Bezugszeichenliste

- 10: Gehäuse
- 11: Zugangsöffnung
- 12: Deckfläche
- 13: Einlass
- 14: Auslass
- 15, 15': erstes Führungsleistenpaar
- 16, 16': zweites Führungsleistenpaar
- 17: Stehbolzen
- 18: Dichtmanschette
- 19: Flansch
- 20, 20': Fuß
- 21: Kerbe
- 30: Schachtbauteil
- 31: Rahmen
- 32: Rohrstutzen
- 33: Abläng-Kerbe
- 40: Deckel
- 41: Befestigungslöcher
- 42: Kappe
- 43: Wellendurchlass
- 44: Dichtung
- 50: Verriegelungshebel
- 51: Betätigungsarm
- 60, 60': Ventilsitz
- 61, 61': Anlenksitz
- 62: Dichtung
- 63: Dichtelement
- 64: Sitzkörper
- 65: Durchgangsöffnung
- 70: Ventilklappe
- 71, 71': Anlenkzapfen
- 72: Klappenfläche
- 73: Betätigungsrippe
- 74: Dichtrand
- 75: Betätigungskante
- 76: Rastkerbe
- 77: Maximum

## Patentansprüche

1. Rückstauverschluss, umfassend
ein Gehäuse (10) mit einem Einlass (13) und einem Auslass (14), an die jeweils eine Rohrleitung anschließbar ist, sowie mit einer oberen Zugangsöffnung (11), die durch einen Deckel (40) verschließbar ist,
mit Ventilsitzen (60) und zugehörigen Ventilklappen (70), die in das Gehäuse (10) ein- und aus dem Gehäuse (10) ausbaubar sind,
**dadurch gekennzeichnet, dass**
das Gehäuse (10) zueinander parallele Führungen (15, 15'; 16, 16') für mindestens zwei gleichartige Ventilsitze (60, 60') aufweist, in welche die Ventilsitze (60, 60') zusammen mit daran angelenkten Ventilklappen (70) derart durch die Zugangsöffnung (11) einsetzbar sind, dass die Ventile (60, 70) in Richtung auf den Einlass (13) sowie auf den Auslass (14) gehalten sind.

2. Rückstauverschluss nach Anspruch 1,
**dadurch gekennzeichnet, dass**
die Ventilsitze (60, 60') Dichteinrichtungen (62) aufweisen und die Ventilklappen (70) als im Wesentlichen starre Körper ausgebildet sind.

3. Rückstauverschluss nach einem der vorhergehenden Ansprüche,
**dadurch gekennzeichnet, dass**
die Ventilklappen (70) einstückig ausgebildet sind.

4. Rückstauverschluss nach einem der vorhergehenden Ansprüche,
**dadurch gekennzeichnet, dass**
am Deckel (40) ein Verriegelungshebel (50) angelenkt und mit einem Betätigungsarm (51) verbunden ist, der in das Gehäuse (10) ragt und in einer Öffnungsstellung außer Eingriff mit einer dazu gehörigen Ventilklappe (70) steht und bei Betätigung mit der dazu gehörigen Ventilklappe (70) in Eingriff gelangt und in einer Schließstellung mit der Ventilklappe (70) verrastet.

5. Rückstauverschluss nach einem der vorhergehenden Ansprüche, insbesondere nach Anspruch 4,
**dadurch gekennzeichnet, dass**
die Ventilklappe (70) eine Betätigungsrippe (73) aufweist, welche einerseits die Ventilklappe (70) im Wesentlichen über ihre gesamte Höhe versteifend überdeckt und andererseits eine von einer Ventilklappenfläche (72) abgewandte Betätigungskante (75) aufweist, die mit dem Betätigungsarm (51) in Eingriff kommt.

6. Rückstauverschluss nach einem der vorhergehenden Ansprüche, insbesondere nach Anspruch 5,
**dadurch gekennzeichnet, dass**
die Betätigungskante (75) eine Rastkerbe (76) zum Verriegeln der Schließstellung aufweist.

7. Rückstauverschluss nach einem der vorhergehenden Ansprüche,
**dadurch gekennzeichnet, dass**
das Gehäuse (10) einen, die Zugangsöffnung (11) umgebenden Flansch (19) zur Bildung einer Schachtöffnung aufweist.

8. Rückstauverschluss nach einem der vorhergehenden Ansprüche,
**dadurch gekennzeichnet, dass**
eine Dichtmanschette mit dem Gehäuse (10) fest verbunden ist, die derart ausgebildet ist, dass eine, an das Gehäuse angrenzende Dichtfolie dicht mit dem Gehäuse verbindbar ist.

9. Rückstauverschluss nach einem der vorhergehenden Ansprüche, insbesondere nach Anspruch 7,
**gekennzeichnet durch**
ein, in seiner Länge veränderbares Schachtbauteil (30) zum Aufsetzen auf das Gehäuse (10).

10. Rückstauverschluss nach einem der vorhergehenden Ansprüche, insbesondere nach Anspruch 9,
**dadurch gekennzeichnet, dass**
das Schachtbauteil (30) einen Rahmen (31) für eine Abdeckung aufweist.

11. Rückstauverschluss nach einem der vorhergehenden Ansprüche,
**dadurch gekennzeichnet, dass**
das Gehäuse (10) Verkrallungsvorsprünge (20, 21) insbesondere an einem unteren Bereich zum Eingießen in Ortbeton aufweist.

12. Rückstauverschluss nach einem der vorhergehenden Ansprüche,
**dadurch gekennzeichnet, dass**
das Gehäuse (10) und/oder der Deckel (40) aus Polymerbeton gegossen sind.

13. Rückstauverschluss nach einem der vorhergehenden Ansprüche, insbesondere nach Anspruch 12,
**dadurch gekennzeichnet, dass**
das Gehäuse eine Heizeinrichtung aufweist.

14. Rückstauverschluss nach einem der vorhergehenden Ansprüche, insbesondere nach Anspruch 13,
**dadurch gekennzeichnet, dass**
die Heizeinrichtung in das Gehäuse eingegossen ist.

15. Rückstauverschluss nach einem der vorhergehenden Ansprüche,
**dadurch gekennzeichnet, dass**
die Ventilsitze (60) und/oder die Ventilklappen (70) mit Dichtungen versehen sind, welche zur besseren Verbindung der Teile miteinander eingespritzt sind.

16. Rückstauverschluss nach einem der vorhergehenden Ansprüche,
**dadurch gekennzeichnet, dass**
das Gehäuse (10) an seinem Einlass (13) und seinem Auslass (14) jeweils eine Muffe zum Anschluss einer Rohrleitung aufweist.
